Europäisches Patentamt

**European Patent Office**

**Office européen des brevets**

(19)

(11) Publication number: **0 052 951**
**A1**

(12) **EUROPEAN PATENT APPLICATION**

(21) Application number: **81305117.4**

(22) Date of filing: **29.10.81**

(51) Int. Cl.³: **G 07 F 5/22**
**G 07 F 1/04, H 04 M 17/02**

(30) Priority: **26.11.80 GB 8037952**

(43) Date of publication of application:
**02.06.82 Bulletin 82/22**

(84) Designated Contracting States:
**AT CH DE IT LI NL SE**

(71) Applicant: **PLESSEY OVERSEAS LIMITED**
**Vicarage Lane**
**Ilford Essex IGI 4AQ(GB)**

(72) Inventor: **Nye, Charles Leonard**
**3 Rose Place**
**St. Helens Merseyside(GB)**

(72) Inventor: **Crossman, Thomas**
**25 Sycamore Road**
**Huyton-with-Roby Liverpool(GB)**

(74) Representative: **Hart, Robert John**
**Plessey Telecommunications Limited Edge Lane**
**Liverpool L7 9NW(GB)**

(54) **Coin operated equipment.**

(57) The telephone box has a coin escrow provided with two storage areas. Each area has inlet and outlet ports controllable in such a manner that coins can be barred from entering, or permitted to enter the storage areas. Selected coins are permitted to leave the areas and pass into a cash box in respect of a charge for a telephone call. The remaining coins are subsequently refunded to the user. The control is effected by a microprocessor.

Fig. 1
COMPLETE DOCUMENT

## COIN OPERATED EQUIPMENT

The present invention relates to coin operated equipment for use in for example, telephone systems.

The coin box telephone equipment currently in use is electromechanically operated and provides a pay-on-answer system. The coin box equipment has a mechanical coin validation system which signals to the exchange which coin types are being inserted. In this type of system the coin acceptor slots are opened on receipt of line reversal current from the exchange. An exchange circuit called the coin-and-fee-check relay set, determines the tariff rate to be charged, the conditions of the call, gives pay tone to the user, opens the coin slots and gives a nine second count down before forced to release when credit expires. The present equipment is costly to maintain and expensive to make.

Accordingly it is an aim of the present invention to provide coin operated telephone equipment which is not of the pay-on-answer type and which is cheaper to make and less costly to maintain.

According to the present invention there is provided coin operated equipment having a coin escrow, said escrow being provided with two or more coin storage areas having inlet and outlet ports controllable in such a manner that coins can be barred from entering, or permitted to enter the storage areas, and selected coins are permitted to leave the storage areas and pass into a coin collection area in respect of a charge for the usage of the equipment, the remaining coins being subsequently refunded to the user.

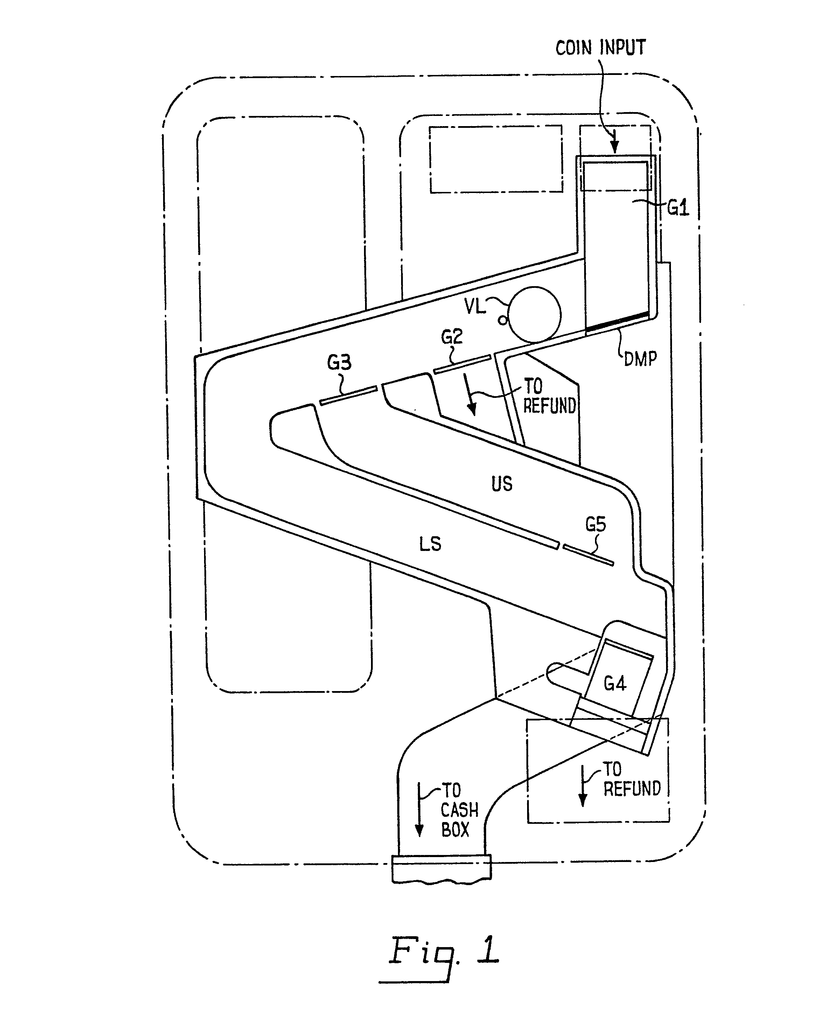

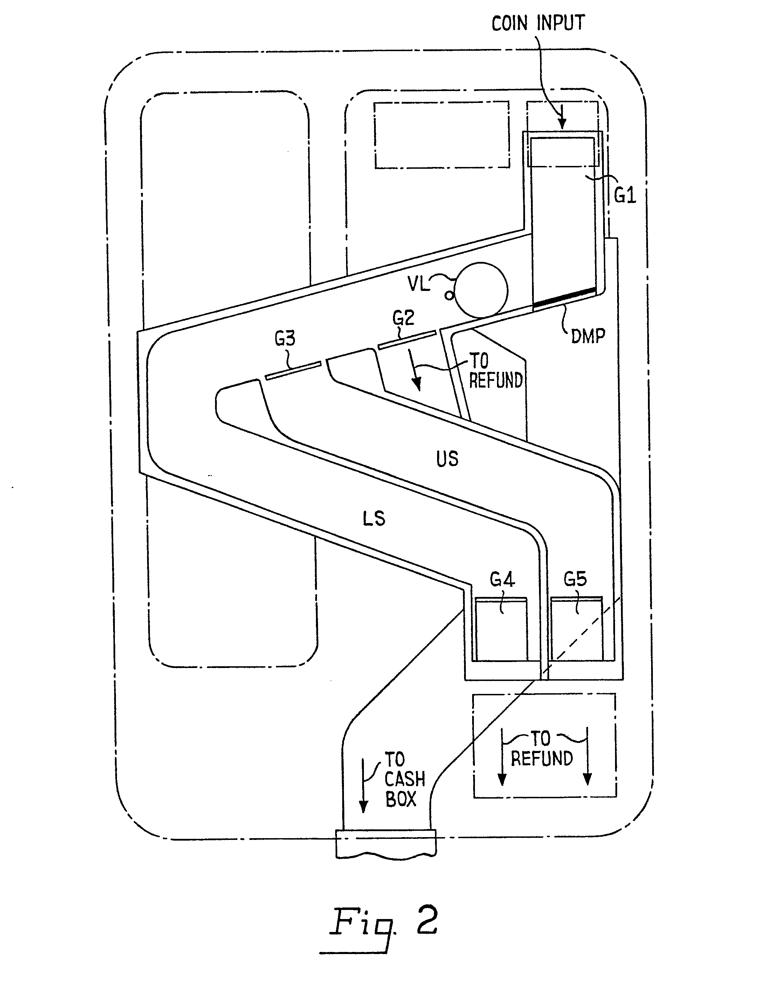

The invention will be described with reference to the accompanying drawings in which Figure 1 shows one embodiment of coin operated telephone equipment including a coin escrow provided with two coin storage areas, and Figure 2 shows an alternative embodiment of the coin operated telephone equipment as shown in Figure 1.

Referring to Figure 1 of the drawings the coin operated telephone equipment is provided with a coin escrow which splits into two substantially parallel tracks providing an upper storage area US and a lower storage area LS. The equipment is microprocessor controlled and as a coin enters the escrow it obscures a light beam arranged between a light emitting diode and a photo-transistor which starts a validator VL operating. The validator VL senses a change in the magnetic field strength as the coin passes a coil. Each coin type has a uniquely different signature which is recorded in the memory of the microprocessor for comparison purposes. The path of the coin is controlled through the escrow by mechanical gates G1 to G5, which can be opened or closed under the control of the microprocessor to direct the coin into the reject runway for refund or to one of the coin storage areas US or LS.

The coins are held in the storage areas while the telephone call is in progress after which the coins relating to the cost of the call are transferred to the cash box and any remaining coins are refunded to the user.

The coins are inserted into the equipment via a single coin input slot and no insertion force is required. All coins pass through a first gauge plate which prevents oversize coins from entering and jamming the escrow. All coins then pass through a second gauge plate which is positioned below the first plate and prevents entry of bowed coins, the virtual thickness of which would jam the escrow.

Any coins which are inserted while the telephone handset is still on its rest are refunded to the user via a flushing gate G1. When the handset is lifted from its rest, gate G1 is closed and all inserted coins are diverted and passed through the validator VL having had any excessive motional energy absorbed by the damper DMP. Any coins which are determined invalid cause gate G2 not to operate, and the coins pass to the refund channel for return to the user. If the coins are valid then gate G2 operates and the coins are allowed to pass further down the escrow. Gate G2 is arranged to be fail-safe, so that if the validator VL is for any reason inoperative, the gate remains in its normal open state and the coins are refunded.

When 50p coins or thicker coins pass into the escrow the microprocessor causes gate G3 to open and the coins are diverted into the upper storage area US. When 10p coins or thinner coins pass into the escrow gate G3 remains closed and the coins pass into the lower storage area LS.

When the call is terminated the coins in storage area LS are cashed or refunded first, by gate G4 being caused to open by the microprocessor, followed by the cashing or refunding of the coins in storage area US by the opening of gates G5 and G4.

Referring to Figure 2, the coin operated telephone equipment is arranged in a similar manner to that shown in Figure 1 except that the upper storage area US and lower storage area LS are arranged so that the two gates G4 and G5 are operated independently by the microprocessor to enable coins in either storage area US or LS to be cashed or refunded first or in any sequence.

Additionally, when either coin storage area US or LS is full and additional credit is required to be established the first coin in either coin storage area US or LS may be cashed thus providing room in either coin storage area US or LS for further coins to be added.

The above description is not intended to limit the scope of the invention. For example, more coin storage areas could be incorporated and controlled by the microprocessor so that coins of a particular denomination are stored in a particular storage area. The microprocessor could then selectively discharge coins from the storage areas into the coin collection area in respect of the charge for the usage of the equipment.

WHAT WE CLAIM IS:

1.    Coin operated equipment having a coin escrow, said escrow being provided with two or more coin storage areas having inlet and outlet ports controllable in such a manner that coins can be barred from entering, or permitted to enter the storage areas and selected coins are permitted to leave the storage areas and pass into a coin collection area in respect of a charge for the usage of the equipment, the remaining coins being subsequently refunded to the user.

2.    Coin operated equipment as claimed in claim 1 wherein the inlet and outlet ports are controlled by mechanical gates under the control of a microprocessor.

3.    Coin operated equipment as claimed in claim 2 wherein the equipment is provided with a coin validating means which is activated by the coin being inserted in the equipment, said validating means being used to generate a uniquely defined signature of the coin which is compared with acceptable signatures by the microprocessor which accordingly operates the respective mechanical gates to cause the coin to be accepted if the signature compares with a stored signature, or to cause the coin to be rejected if said signatures do not compare.

4.    Coin operated equipment as claimed in claim 3 wherein the microprocessor operates the mechanical gates so that coins of a particular denomination or denominations pass into one storage area and coins of a different denomination or denominations pass into a different storage area.

5.    Coin operated equipment as claimed in claim 4
wherein the equipment is telephone call-making equipment
which accepts valid coins before a telephone call is
set-up and stores the coins in the storage areas for
the duration of the call, after which, the microprocessor
causes the mechanical gates controlling the outlet ports
of the areas to open and close so that certain coins
are passed into the coin collection area in respect of
a charge for the usage of the equipment, while the remaining coins are passed to a refund collection area for
return to the user.

6.    Coin operated equipment as claimed in claim 5
wherein the call-making equipment includes a telephone
handset and the equipment is arranged so that if a coin
is inserted into the equipment before the handset is
lifted it immediately passes to the refund collection area.

7.    Coin operated equipment as claimed in claim 4 or 6
wherein if the validating means is inoperative any coin
inserted in the equipment is passed to the refund collection
area.

8.    Coin operated equipment as claimed in claim 7
wherein if either storage area is full and additional
charge credit is required, the first coin in either area
can be cashed providing room in the areas for further
coins.

9.    Coin operated equipment as claimed in claim 8
wherein the equipment includes a coin input slot having a first gauge plate which prevents oversize coins from entering and jamming the escrow, and a second gauge plate which is positioned below the first plate to prevent bowed coins from entering and jamming the escrow.

10. Coin operated equipment as claimed in claim 9 wherein a damper is provided to remove excessive motional energy from each coin after is has passed through the gauge plates.

COIN INPUT

G1

VL

G3

G2

TO REFUND

DMP

US

G5

LS

G4

TO CASH BOX

TO REFUND

Fig. 1

Fig. 2

European Patent
Office

**EUROPEAN SEARCH REPORT**

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | G 07 F 5/22<br>G 07 F 1/04<br>H 04 M 17/02 |
| X | <u>GB - A - 2 042 783</u> (Y. HAYASHI)<br><br>* Page 1, lines 4-13; page 1, line 80 - page 2, line 49; figures 1-3 * | 1-4 | |
| X | <u>GB - A - 1 565 387</u> (Y. HAYASHI)<br><br>* Page 1, line 84 - page 2; line 71; figures 1,3 * | 1-4 | |
| X | <u>GB - A - 1 502 250</u> (R. HEATHCOTE)<br><br>* Page 1, line 12 - page 3, line 89 ; figures 1-4 * | 1-4 | **TECHNICAL FIELDS SEARCHED (Int.Cl. ³)**<br><br>G 07 F 1/00<br> 1/02<br> 1/04<br> 3/00<br> 3/02<br> 3/04<br> 5/00<br> 5/08<br> 5/14<br> 5./22<br> 9/04<br> 9/08<br>H 04 M 17/00<br> 17/02 |
| A | <u>US - A - 3 620 340</u> (M.M. JENKINS)<br><br>* Abstract, column 1, lines 67-75; column 2, line 52 - column 4, line 24; figures 1-7 * | 1-4 | |
| A | <u>GB - A - 2 005 517</u> (J. RUEFF)<br><br>* Page 1, lines 5-63; figures * | 1-5,7 | **CATEGORY OF CITED DOCUMENTS** |
| A | <u>DE - A - 2 052 229</u> (H. KREIM)<br><br>* Whole document * | 9 | X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D: document cited in the application<br>L: document cited for other reasons |
| A | <u>US - A - 3 889 792</u> (F.G. WILLIS)<br><br>* Whole document * | 10 | |
| The present search report has been drawn up for all claims | | | &: member of the same patent family, corresponding document |

| Place of search | Date of completion of the search | Examiner |
|---|---|---|
| The Hague | 04-03-1982 | RUDOLPH |

EPO Form 1503.1  06.78